# EUROPEAN PATENT APPLICATION

(11) **EP 4 686 601 A1**
(43) Date of publication of application: **04.02.2026**
(21) Application number: 25191079.0
(22) Date of filing: 22.07.2025
(51) Int. Cl.: B60L 53/16

(54) **CHARGING WAKE-UP CIRCUIT, ON-BOARD CHARGING DEVICE, ELECTRIC DRIVE SYSTEM AND VEHICLE**

(30) Priority: 29.07.2024 CN 202411032652
(71) Applicant: Valeo eAutomotive Shenzhen Co., Ltd, Shenzhen Guangdong 518128 (CN)
(72) Inventor: XI, Yiyi, Shenzhen, 518128 (CN); LIU, Tina-Ping, Shenzhen, 518128 (CN); LING, Zhichao, 518128, Shenzhen (CN); LI, Zhongzhong, 518128, Shenzhen (CN); KE, Run, 518128, Shenzhen (CN)
(74) Representative: Valeo Powertrain Systems

(57) **Abstract**

A charging wake-up circuit, on-board charging device, electric drive system and vehicle are provided. The charging wake-up circuit may comprise: a rising edge detection circuit which is configured to receive an input signal from an external charging device, and generate a rising edge detection signal at a first end of the rising edge detection circuit in response to a rising edge in the received input signal, and an output circuit which is configured to generate a wake-up control signal in response to the rising edge detection signal, wherein the wake-up control signal is used to wake up a circuit to be woken up.

## Description

### TECHNICAL FIELD

The present disclosure relates to the technical field of charging control, in particular to a charging wake-up circuit, an on-board charging device, an electric drive system and a vehicle.

### BACKGROUND

Intelligent features are becoming an important characteristic of electric vehicle technology to an ever increasing degree as it develops. To save energy, an electric vehicle may be in a sleep state in certain situations, for example: when it is not connected to an external charging device; when it is not being charged after being connected to an external charging device; or when a sleep instruction is received. Thus, there is a need to design a wake-up circuit, so as to wake up an electric vehicle in a sleep state when an on-board charging device needs to be enabled to charge the electric vehicle. For example, it has become necessary to wake up a control circuit (e.g. a microcontroller unit, MCU) of the on-board charging device or on-board charger (OBC) of the electric vehicle, so as to control a charging process.

According to current standards, such as GB/T 18487.1-2023, control pilot (CP) signals inputted to on-board charging devices have multiple states. For example, depending on a user's actual needs, they may include multiple charging wake-up modes for the electric vehicle, such as a plug-in charging wake-up mode, an AC charging wake-up mode and a booked charging wake-up mode, etc. Moreover, different charging wake-up modes correspond to different ways of switching between CP signal states. It is hoped that, with regard to the switching of states of CP signals corresponding to different charging wake-up modes, an electric vehicle can always be woken up to ensure that charging can take place promptly when charging is required. That is, a charging wake-up circuit is required to output a wake-up signal, in order to wake-up a circuit to be woken up (e.g. a control circuit such as an MCU) in the on-board charging device, so that the circuit to be woken up can operate normally, to ensure that the electric vehicle can be charged normally and promptly.

Many existing charging wake-up circuits might only be capable of realizing one of the wake-up modes; as a result, there is only one method of waking up the electric vehicle. Alternatively, in order to be compatible with the various charging wake-up modes mentioned above, multiple charging wake-up circuits are needed, and it is necessary to provide an additional MCU to detect the state of the CP signal; this MCU must be continuously operational and cannot sleep completely, and consequently, the quiescent current is quite high during sleep. Furthermore, additional circuit costs will be added, and complexity of circuit structure will result; this is not in conformity with the development trends of miniaturization and the introduction of intelligent features.

### SUMMARY

In one aspect of the present disclosure, a charging wake-up circuit is provided. The circuit may comprise: a rising edge detection circuit, configured to receive an input signal from an external charging device, and generate a rising edge detection signal at a first end of the rising edge detection circuit in response to a rising edge in the received input signal, wherein the received input signal undergoes state switching between multiple states; and an output circuit, configured to generate a wake-up control signal in response to the rising edge detection signal, wherein the wake-up control signal is used to wake up a circuit to be woken up, wherein the state switching comprises one or more of the following: switching from a state in which a first level is maintained to a state in which a second level greater than the first level is maintained; switching from the state in which the second level is maintained to a PWM signal state; or switching from the state in which the first level is maintained to the PWM signal state.

In an embodiment, the wake-up circuit further comprises: a falling edge generating circuit, configured to generate a falling edge trigger signal, for waking up the circuit to be woken up, on the basis of the wake-up control signal generated by the output circuit.

In an embodiment, the rising edge detection circuit comprises: a first resistor, a first end of the first resistor receiving the input signal, and a second end of the first resistor being grounded; a first capacitor, a first end of the first capacitor being connected to the first end of the first resistor; a first diode, a cathode end of the first diode being connected to a second end of the first capacitor, and an anode end of the first diode being grounded; a second resistor and a third resistor, a first end of the second resistor being connected to the second end of the first capacitor, a second end of the second resistor being connected to a first end of the third resistor, and a second end of the third resistor being grounded; and a first transistor, a control electrode of the first transistor being connected to the second end of the second resistor, a first electrode of the first transistor being grounded, and a second electrode of the first transistor serving as the first end of the rising edge detection circuit, and being connected to the output circuit.

In an embodiment, the output circuit comprises: a second transistor, a first electrode of the second transistor being connected to a power supply, a control electrode of the second transistor being connected to the first end of the rising edge detection circuit, and a second electrode of the second transistor serving as an output end of the output circuit; wherein, when a first control signal associated with the rising edge detection signal is applied to the control electrode of the second transistor, the second transistor switches from OFF to ON, and the second electrode of the second transistor outputs a wake-up control signal.

In an embodiment, the falling edge generating circuit comprises: a third transistor, a first electrode of the third transistor being connected to a power supply and the circuit to be woken up, a control electrode of the third transistor being connected to an output end of the output circuit, and a second electrode of the third transistor being grounded; wherein, when a second control signal associated with the wake-up control signal is applied to a gate of the third transistor, the third transistor switches from OFF to ON, and the first electrode of the third transistor outputs a falling edge trigger signal, for waking up the circuit to be woken up.

In an embodiment, the charging wake-up circuit further comprises: a resistor-capacitor RC circuit, connected between the first end of the rising edge detection circuit and a control input end of the output circuit.

In an embodiment, in the case where the input signal switches from the state in which the first level is maintained to the state in which the second level is maintained, at the instant that a voltage of the input signal switches from the first level to the second level, the first transistor is switched on, and a ground level signal is generated at the first end of the rising edge detection circuit, to serve as the rising edge detection signal; and when the voltage of the input signal subsequently remains at the second level, the first transistor is switched off, and the rising edge detection signal is not generated at the first end of the rising edge detection circuit.

In an embodiment, a PWM signal corresponding to the PWM signal state has a first PWM level and a second PWM level higher than the first PWM level, and wherein, in the case where the input signal switches from the state in which the second level is maintained to the PWM signal state, when a voltage of the input signal remains at the second level, the first transistor is switched off, and the rising edge detection signal is not generated at the first end of the rising edge detection circuit; at the instant that the voltage of the input signal switches from the first PWM level to the second PWM level, the first transistor is switched on, and a ground level signal is generated at the first end of the rising edge detection circuit, to serve as the rising edge detection signal.

In an embodiment, a PWM signal corresponding to the PWM signal state has a first PWM level and a second PWM level higher than the first PWM level, and wherein, in the case where the input signal switches from the state in which the first level is maintained to the PWM signal state, when a voltage of the input signal remains at the first level, the first transistor is switched off, and the rising edge detection signal is not generated at the first end of the rising edge detection circuit; at the instant that the voltage of the input signal switches from the first level or the first PWM level preceding a first PWM pulse of the PWM signal to the second PWM level, the first transistor is switched on, and a ground level signal is generated at the first end of the rising edge detection circuit, to serve as the rising edge detection signal.

In an embodiment, the first transistor remains switched on for the duration of the PWM signal state, such that the rising edge detection signal continues for the duration of the PWM signal state.

In an embodiment, the input signal is a signal resulting from conversion of a control pilot (CP) signal outputted from the external charging device, the circuit to be woken up is a control circuit in an on-board charging device, and the charging wake-up circuit is also arranged in the on-board charging device.

According to another aspect of the present disclosure, an on-board charging device is provided, wherein the on-board charging device may comprise: a control circuit, wherein a charging wake-up circuit as described in the abovementioned aspect may be used to wake up the control circuit.

According to another aspect of the present disclosure, an electric drive system is provided, wherein the electric drive system may comprise: an on-board charging device as described in the abovementioned aspect, for charging an energy storage device; and a power conversion circuit, for generating drive power on the basis of power from the energy storage device.

According to another aspect of the present disclosure, a vehicle is provided, comprising: an electric drive system as described in the abovementioned aspect.

By means of the charging wake-up circuit, on-board charging device, electric drive system and vehicle of the present disclosure, it is possible to realize a wake-up funct i on for various states of input signals corresponding to various charging wake-up scenarios, so that the circuit to be woken up can be promptly woken up for charging in each charging wake-up scenario.

### BRIEF DESCRIPTION OF THE DRAWINGS

To explain the technical solutions in embodiments of the present disclosure or the prior art more clearly, the drawings that need to be used in the description of embodiments of the present disclosure or the prior art are presented in simple terms below. Obviously, the drawings in the description below are merely some embodiments recorded in the present disclosure, and those skilled in the art could obtain other drawings based on these drawings according to embodiments of the present disclosure.
Fig. 1 shows a schematic diagram of an exemplary charging system of an electric vehicle.
Fig. 2 shows a structural schematic diagram of a charging wake-up circuit according to embodiments of the present disclosure.
Fig. 3 shows a schematic waveform diagram of an input signal received by a charging wake-up circuit.
Fig. 4 shows a specific circuit structure of all partial circuits in the charging wake-up circuit described with reference to Figs. 2 and 3.
Fig. 5 shows a simulation result for the circuit shown in Fig. 4.

### DETAILED DESCRIPTION

Technical solutions in embodiments of the present disclosure are described clearly and completely below in conjunction with the drawings in embodiments of the present disclosure. Obviously, the described embodiments are merely some rather than all of the embodiments of the present disclosure. All other embodiments obtained by those skilled in the art on the basis of the embodiments in the present disclosure without inventive effort are included in the scope of protection of the present disclosure.

It may be advantageous to set forth definitions of certain words and phrases used throughout this patent document before describing the specific embodiments below. The terms "comprising" and "including" and derivatives thereof mean including but not limited to. The term "or" is inclusive and means and/or. The phrase "associated with..." and its derivatives mean comprising, comprised within..., connected to, interconnected with..., including, included within..., connected to or connected with..., coupled to or coupled with..., capable of communicating with..., cooperating with..., interwoven, juxtaposed, close, bound to or bound with..., having, having ... attribute, having ... relationship or having a relationship with..., etc. The term "controller" means any device, system or part thereof that controls at least one operation. Such a controller may be implemented in hardware, or in a combination of hardware and software and/or firmware. The functions associated with any particular controller can be centralized or distributed locally or remotely.

The terminology used herein to describe embodiments of the present disclosure is not intended to limit and/or define the scope of the present disclosure. For example, unless defined otherwise, the technical or scientific terms used in the present disclosure shall have the common meanings understood by those skilled in the art.

It will be understood that words such as "first" and "second" used in the present disclosure do not indicate any order, quantity or importance, being merely used to distinguish between different component parts. Unless the context clearly indicates otherwise, words such as the singular form "a", "an" or "the" do not represent a quantitative limitation, but rather indicate the presence of at least one.

As used herein, any reference to "an example" or "example", "an embodiment" or "embodiment" means that the particular element, feature, structure or characteristic described in conjunction with the embodiment is included in at least one embodiment. The phrases "in an embodiment" or "in an example" appearing in different places herein do not necessarily all refer to the same embodiment.

It will be further understood that words such as "comprise" or "include" mean that the element or object appearing before the word encompasses the elements or objects and their equivalents listed after the word, without excluding other elements or objects. Words such as "connected" or "joined" are not restricted to a physical or mechanical connection, and may include an electrical connection, whether direct or indirect. The terms "upper", "lower", "left", "right" and the like are only used to indicate a relative positional relationship, and when the absolute position of a described object changes, the relative positional relationship may also change accordingly.

The various embodiments discussed below for the purpose of describing the principles of the present disclosure in this patent document merely serve as illustration, and should not be construed as limiting the scope of the present disclosure in any way.

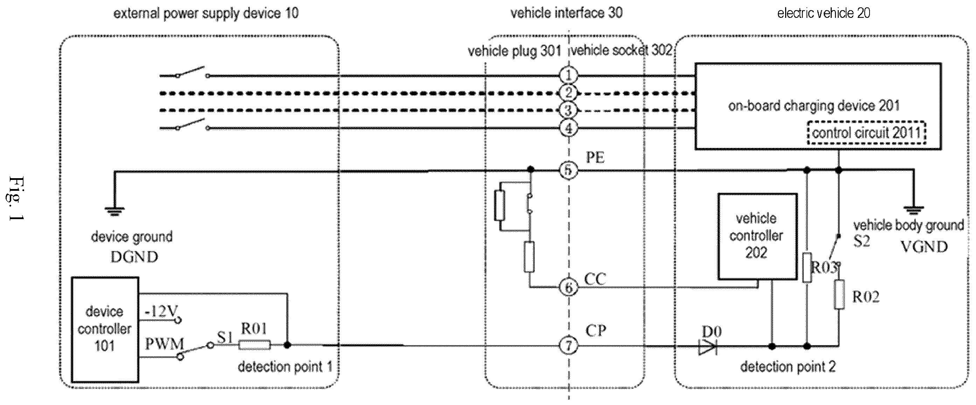

Fig. 1 shows a schematic diagram of an exemplary charging system of an electric vehicle. This schematic diagram of a charging system is also found in national standard GB/T18487.1-2023.

As shown in Fig. 1, an external power supply device 10 and an electric vehicle 20 can be connected via a vehicle interface 30. The vehicle interface 30 may comprise a vehicle plug 301 and a vehicle socket 302; the vehicle plug 301 is associated with the external charging device 10, and the vehicle socket 302 is associated with the electric vehicle 20. The external power supply device 10 may be a charging station, and a charging gun supplied with the charging station comprises the vehicle plug for connecting to the vehicle socket associated with the electric vehicle 20, so that the connection can be used to supply power from the external charging device to an on-board charging device 201 of the electric vehicle.

Once the vehicle plug associated with the vehicle interface 30 has been connected to the vehicle socket associated with the electric vehicle 20, i.e. once the vehicle interface has been fully connected, a vehicle controller 202 of the electric vehicle 20 can determine that the vehicle interface is fully connected on the basis of a CC signal of a CC end. After full connection, a device ground DGND and a vehicle body ground VGND are connected, and both have a ground level.

In addition, a signal at a CP port of the external charging device, also called a control pilot (CP) signal, corresponds to different states of the external charging device, and is a signal that can be controlled by a device controller 101 of the external charging device. In the absence of a connection to an electric vehicle, the CP signal may be a PWM signal or a voltage signal with a level of 12 V (with an amplitude varying between +12 V and -12 V), and is switched via a switch S2. Taking as an example the case where the external charging device is a charging station comprising a charging gun, before insertion of the charging gun into the vehicle socket of the electric vehicle (referred to as plug-in hereinbelow for short), the CP signal is a voltage signal with a level of 12 V (which is only an example); after charging gun plug-in, the voltage of the CP signal will jump from a level of 12 V to a level of 9 V due to the presence of a voltage-dividing resistor (R03 as shown in Fig. 1) as shown in Fig. 1, or if switch S2 is already closed at this time (the time of closing being self-defined), the voltage will jump to a level of 6 V due to the presence of a resistor R02 shown in Fig. 1; thereafter, after the device controller (e.g. MCU) of the charging station detects that the CP signal has jumped from the level of 12 V to the level of 9 V or 6 V and successfully performs confirmation by data communication with the electric vehicle, switch S1 is switched to output a PWM signal (a PWM HIGH level of this PWM signal is 9 V or 6 V, the same as a level of the previous stage (due to the presence of a diode D1, resistances R02 and R03 in Fig. 1 cannot continue to act as voltage division signals, so a PWM LOW level is - 12 V)), and a PWM duty cycle represents the size of an output current of the charging station; after the device controller of the charging station detects that the CP signal has changed to a PWM signal with a level of 6 V, a main relay on a charging circuit is closed, and AC power can be supplied to the on-board charging device 201.

Of course, the charging system shown in Fig. 1 throughout this text is merely shown as an example; depending on the particular standard and application scenario, charging systems with other structures are possible. For example, a charging system with another structure might not include switch S2. The present disclosure imposes no restrictions, being mainly concerned with a charging wake-up circuit based on CP signal state switching.

A common exemplary application scenario of CP signal-based charging wake-up to which the electric vehicle charging system shown in Fig. 1 relates is presented below.

Regarding an application scenario of plug-in charging wake-up, the electric vehicle is in a whole-vehicle sleep mode, and not yet connected to the charging gun, so is unable to receive a CP signal from the charging gun via the CP port; therefore, the voltage at detection point 2 is ground level (0 V). When plug-in takes place, depending on the time at which switch S2 is closed, a signal after a CP signal received by the electric vehicle via the CP port of the vehicle interface has passed through diode D0 (serving as a signal inputted to a charging wake-up circuit that will be described below) has a level of 9 V or 6 V. The charging station can then perform data communication exchange with the electric vehicle end, and switch to outputting a PWM signal after exchange is complete. In addition, with regard to possible poor contact in the connection interface in this application scenario or other application scenarios, such that no CP signal can be received via the CP port (the charging station still outputs a PWM signal) and the electric vehicle consequently might go to sleep again, in this case, the voltage at detection point 2 is 0 V, and when a CP signal is received again, a signal after the CP signal received via the CP interface has passed through diode D0 also undergoes switching from a state in which a level of 0 V is maintained to a PWM signal (having a level of 9 V or 6 V and a level of 0 V) state, so it is also necessary to wake up the electric vehicle. Thus, the signal (at detection point 2) after the CP signal received via the vehicle interface has passed through diode D0 undergoes switching from a state in which a level of 0 V is maintained to a state in which a level of 9 V or 6 V is maintained, or switching from a state in which a level of 0 V is maintained to a PWM signal (having a level of 9 V or 6 V and a level of 0 V) state.

In addition, regarding an application scenario of booked charging wake-up (wherein booking is performed at the external charging device side or in an APP), the electric vehicle can connect to the charging gun, but before the booked time arrives, switch S2 is opened; the charging station outputs a 12 V level signal so that the CP signal level is 9 V (obtained by voltage division of 12 V) and, after successfully performing confirmation by data communication with the electric vehicle, switches to a PWM signal (with levels of 9 V and 0 V, because switch S2 is open), and the electric vehicle is in a whole-vehicle sleep state; when the booked time approaches, the charging station can re-output a voltage signal with a level of 12 V, switch S2 can close at a self-defined time after the booked time, and, after detecting that the CP signal has changed to a level of 9 V or 6 V and successfully performing confirmation by data communication with the electric vehicle, the charging station switches to a PWM signal, for charging the electric vehicle. Thus, the signal after the CP signal received via the vehicle interface has passed through diode D0 undergoes switching from a state in which a level of 9 V or 6 V is maintained to a PWM signal state with a level of 9 V or 6 V and a level of 0 V.

In addition, in the case of a charging wake-up mode for AC charging, similarly to booked charging, the electric vehicle can connect to the charging gun, but after plug-in, there is no AC power in the charging circuit to charge the on-board charging device 201 in the electric vehicle, so the electric vehicle is in a whole-vehicle sleep mode, until a signal outputted by the charging station in response to the presence of AC power is a PWM signal (the PWM signal being associated with a charging process based on AC power). Thus, the signal after the CP signal received via the vehicle interface has passed through diode D0 undergoes switching from a state in which a level of 9 V or 6 V is maintained to a PWM signal (with a level of 9 V or 6 V and a level of 0 V) state.

In summary, in the case of the electric vehicle charging system shown in Fig. 1, a signal after an input signal received at the electric vehicle side has passed through diode D0 undergoes switching between different states, and a circuit to be woken up in the electric vehicle (e.g. a control circuit) needs to be woken up when the state of the input signal switches, so as to perform exchange between the electric vehicle and the external charging device, and thereby accomplish charging. To summarize, the switching of states may comprise: 1. switching from a state in which a level of 0 V is maintained (as an example of a first level mentioned below, also being used to represent a first PWM level) to a state in which a level of 9 V or a level of 6 V is maintained (as an example of a second level mentioned below, also being used to represent a second PWM level); 2. switching from a state in which a voltage of 0 V is maintained to a PWM signal state with a level of 9 V or a level of 6 V and a level of 0 V; 3. switching from a state in which a level of 9 V or a level of 6 V is maintained to a PWM signal state with a level of 9 V or a level of 6 V and a level of 0 V.

Thus, in order to realize normal charging of an electric vehicle, there is a need for a charging wake-up circuit, which makes it possible to wake up a circuit to be woken up in the electric vehicle (e.g. a control circuit) when the electric vehicle is sleeping so as to charge the electric vehicle, and is suitable for different charging wake-up application scenarios.

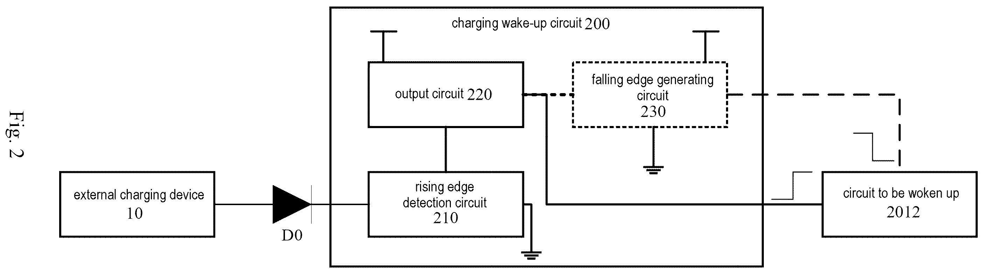

Fig. 2 shows a structural schematic diagram of a charging wake-up circuit according to embodiments of the present disclosure. The charging wake-up circuit may be included inside or outside an on-board charging device for an electric vehicle as shown in Fig. 1. The charging wake-up circuit may be used to wake up a control circuit in the on-board charging device, or to wake up an auxiliary power supply that supplies an operating voltage to the control circuit in the on-board charging device, when the electric vehicle is in a sleep state, so that the control circuit can control a charging process of the vehicle.

As shown in Fig. 2, the charging wake-up circuit 200 may comprise a rising edge detection circuit 210 and an output circuit 220.

The rising edge detection circuit 210 may be configured to receive an input signal from the external charging device 10, and generate a rising edge detection signal at a first end of the rising edge detection circuit 210 in response to a rising edge in the received input signal, wherein the received input signal can undergo one or more state switching events between multiple states.

As stated above, for different charging wake-up scenarios, the state switching events may include: switching from a state in which a first level is maintained to a state in which a second level (e.g. 9 V or 6 V) (greater than the first level (e.g. 0 V)) is maintained; switching from the state in which the second level is maintained to a PWM signal state; or switching from the state in which the first level is maintained to the PWM signal state.

For example, referring to Fig. 1, the external charging device 10 may be a charging station, and may supply a CP signal to the electric vehicle via the vehicle interface. The input signal of the charging wake-up circuit from the external charging device may be a signal resulting from conversion of the CP signal; for example, as shown in Fig. 1, the signal after the CP signal has passed through diode D0 serves as the input signal of the charging wake-up circuit 20. Thus, a voltage of a negative level in the CP signal will correspond to a voltage of 0 V in the input signal.

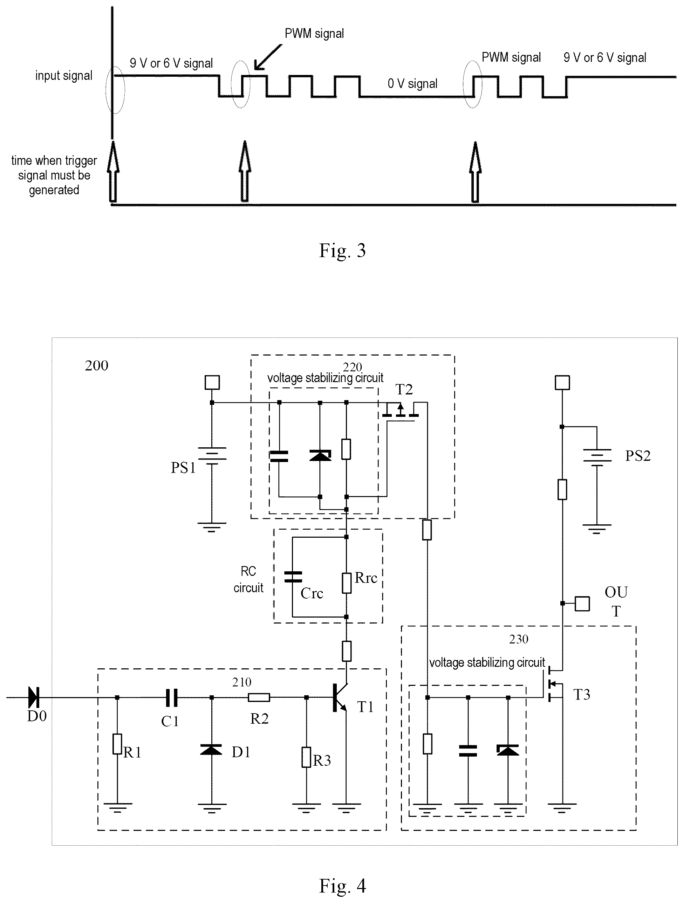

To facilitate explanation, Fig. 3 shows a schematic waveform diagram of an input signal (associated with the CP signal, at detection point 2 as shown in Fig. 1) received by the charging wake-up circuit (specifically, the rising edge detection circuit). It should be understood that, in Fig. 3 and elsewhere herein, all specific voltage values are merely shown as examples; depending on actual circumstances, these voltage values could be other values, as long as they have a predetermined size relationship.

Referring to Fig. 1, two types of signals may be provided within the external charging device: a voltage signal with a first preset level (e.g. 12 V), or a PWM signal with a negative voltage and a positive voltage of the first preset level (for example, the amplitude values of the PWM signal are +12 V and -12 V). Thus, before plug-in, the input signal received from the external charging device by the rising edge detection circuit 210 of the charging wake-up circuit 200 is a voltage signal with a level of 0 V (at which time a signal outputted by the external charging device has a voltage level of 12 V); and after plug-in, as described above for different scenarios, and as shown in Fig. 3, the voltage of the input signal can jump from 0 V to 9 V or 6 V (i.e. switch from a state in which a level of 0 V is maintained to a state in which a level of 9 V or 6 V is maintained), or the voltage of the input signal can switch from 9 V or 6 V to a PWM signal voltage (i.e. switch from a state in which a level of 9 V or 6 V is maintained to a PWM signal state with a level of 9 V or a level of 6 V and a level of 0 V), or the voltage of the input signal can switch from 0 V to a PWM signal voltage (i.e. switch from a state in which 0 V is maintained to a PWM signal state with a level of 9 V or a level of 6 V and a level of 0 V).

A constant level of 9 V or 6 V is shown in Fig. 3 to facilitate description, but in fact, 9 V and 6 V might be present simultaneously; specifically, at first, switch S2 shown in Fig. 1 is not closed, at which time the CP signal level is 9 V, but after switch S2 is closed, the CP signal level will jump from 9 V to 6 V. Similarly, a situation is also possible in which the PWM signal amplitude is 9 V first, and changes to 6 V after switch S2 is closed. However, the trend of state switching events that exist can be reflected in Fig. 3.

In addition, it should also be noted that although all state switching events that might be involved when the charging wake-up process takes place are shown in Fig. 3 to facilitate description, in reality, there might be only some of these switching events.

It can be seen from Fig. 3 that when each state switching event takes place, a rising edge (as indicated by the ellipses) is present in the signal waveform, so it is possible to detect a rising edge in the received input signal by means of the rising edge detection circuit 210 and determine the presence of a state switching event, and it is thus possible to wake up a circuit to be woken up (e.g. a control circuit (e.g. MCU) in the on-board charging device) on the basis of the rising edge detection result. For example, after a rising edge is detected, a rising edge detection signal, i.e. a signal produced on the basis of the presence of a rising edge, can be generated at the first end of the rising edge detection circuit 210.

For example, a level corresponding to the rising edge detection signal may be chosen according to the circuit structure of the output circuit; for example, if the output circuit needs to output a signal in response to a LOW level (e.g. 0 V), the level corresponding to the rising edge detection signal is this LOW level (e.g. ground level).

Next, returning to Fig. 2, the output circuit 220 may be configured to generate a wake-up control signal in response to the rising edge detection signal, and the wake-up control signal is used to wake up the circuit to be woken up.

For example, the output circuit 220 does not output a signal when there is no rising edge detection signal. When a rising edge detection signal is received, a wake-up control signal with a HIGH level is outputted in response to the rising edge detection signal; at this time, since a voltage at an input end of a circuit in the next stage after the output circuit 220 (e.g. the circuit to be woken up or a falling edge generating circuit as described below) may be at a LOW level (e.g. 0 V) in the absence of a signal input and change to a level corresponding to an inputted signal when there is such a signal inputted, it can be concluded that the input signal at the input end of the next-stage circuit has a rising edge, i.e. a rising edge trigger signal is generated at the input end of the next-stage circuit.

In some cases, if the circuit to be woken up is woken up on the basis of a rising edge trigger signal, an output end of the output circuit can be connected to the input end of the circuit to be woken up, so the input signal at the input end of the circuit to be woken up can serve as a rising edge trigger signal to wake up the circuit to be woken up.

In other cases, if the circuit to be woken up is woken up on the basis of a falling edge, the charging wake-up circuit may further comprise a falling edge generating circuit 230. As indicated by the dotted-line box in Fig. 2, the falling edge generating circuit 230 serves as the circuit in the next stage after the output circuit 220, and may be configured to generate a falling edge trigger signal, for waking up the circuit to be woken up, on the basis of the wake-up control signal generated by the output circuit 220.

Thus, with reference to the charging wake-up circuit described in Figs. 2 and 3, various state switching events of input signals corresponding to various charging wake-up scenarios can be detected on the basis of a rising edge, so as to generate a trigger signal for waking up a circuit to be woken up for each type of state switching event, so that the electric vehicle can be promptly woken up for charging in each charging wake-up scenario.

Fig. 4 shows a specific circuit structure of all partial circuits in the charging wake-up circuit described with reference to Figs. 2 and 3. However, it should be understood that the structure of each partial circuit is merely an example, and other alternative structures or additional structures are possible, as long as the same functions can be performed.

As shown in Fig. 4, the rising edge detection circuit may comprise a first resistor R1, a first capacitor C1, a first diode D1, a second resistor R2 and a third resistor R3, and a first transistor T1.

A first end of the first resistor R1 receives an input signal, and a second end of the first resistor R2 is grounded. A first end of the first capacitor C1 is connected to the first end of the first resistor R1. A cathode end of the first diode D1 is connected to a second end of the first capacitor C1, and an anode end of the first diode D2 is grounded. A first end of the second resistor R2 is connected to the second end of the first capacitor C1, a second end of the second resistor R2 is connected to a first end of the third resistor R3, and a second end of the third resistor R3 is grounded. A control electrode of the first transistor T1 is connected to the second end of the second resistor R2, a first electrode of the first transistor T1 is grounded, and a second electrode of the first transistor T1 serves as the rising edge detection circuit, so as to provide a rising edge detection signal when a rising edge is detected, and is connected to the output circuit 220.

Fig. 4 shows that the first transistor T1 may be a bipolar transistor (BJT), so in an NPN transistor as shown in Fig. 4, the control electrode may be the base, with the first electrode as the emitter, and the second electrode as the collector; the manner in which the second resistor R2 and the third resistor R3 are connected can ensure the range of current flowing into the base and a voltage difference between the base and the emitter, so as to ensure normal switching of the NPN transistor on and off. Of course, the first transistor T1, and a second transistor and a third transistor as mentioned below, could all be of different types from those shown in Fig. 4, as long as the control logic among them is able to realize functions similar to those described in the present disclosure.

As can be seen, the rising edge detection circuit is configured so as to not generate a rising edge detection signal at the first end thereof when no rising edge is detected in the input signal, so the subsequent output circuit cannot generate a wake-up control signal. When a rising edge is detected in the input signal, a rising edge detection signal can be generated at the first end of the rising edge detection circuit, for the subsequent output circuit to generate a wake-up control signal.

In an embodiment, as shown in Fig. 4, the output circuit 220 may comprise a second transistor T2. A first electrode of the second transistor T2 is connected to a first power supply PS1, a control electrode of the second transistor T2 is connected to the first end of the rising edge detection circuit 210, and a second electrode of the second transistor T2 serves as an output end. When a first control signal associated with a rising edge detection signal is applied to the control electrode of the second transistor T2 (for example, as shown in Fig. 4, the rising edge detection signal may be converted via a resistor or a capacitor to the first control signal for application to the control electrode of the second transistor), the second transistor T2 switches from OFF to ON, then the second electrode of the second transistor T2 outputs a wake-up control signal having a power supply voltage level of the first power supply PS1; thus, the power supply voltage level can be used to form a rising edge trigger signal at the input end of the circuit to be woken up (because the voltage at this input end changes from 0 V to the power supply voltage level), so as to wake up the circuit to be woken up.

In an embodiment, the transistor T2 may be a PMOS; the control electrode is the gate, the first electrode is the source, and the second electrode is the drain. In addition, the power supply voltage level of the first power supply PS1 may be 12 V.

In other words, based on the first control signal (associated with the rising edge detection signal) at the control electrode of the second transistor T2, the output circuit 220 can output a voltage signal having the power supply voltage level of the first power supply PS1. Conversely, when there is no rising edge detection signal, the second transistor T2 is OFF, so the second electrode of the second transistor T2 does not output a signal, and in the absence of a signal input, the voltage at the input end of the next-stage circuit is 0 V. Thus, a jump in voltage (from 0 V to the power supply voltage level) at the input end of the next-stage circuit (the circuit to be woken up or the falling edge generating circuit) may be regarded as a rising edge, so it can be concluded that a rising edge trigger signal (which may be equivalent to the wake-up control signal) is formed at the input end of the next-stage circuit, to wake up the circuit to be woken up, or to serve as an input signal for the next-stage falling edge generating circuit.

In an embodiment, when the transistor T2 is a PMOS, the output circuit 220 may further comprise a voltage stabilizing circuit (e.g. a parallel-connected structure of one or more of a resistor, a capacitor and a Zener diode) between the gate and source of the second transistor T2, to ensure that the second transistor T2 can switch on normally.

In an embodiment, as shown in Fig. 4, the falling edge generating circuit 230 may comprise a third transistor T3. A first electrode of the third transistor T3 is connected to a second power supply PS2 and the circuit to be woken up, a control electrode of the third transistor T3 is connected to the output end of the output circuit 220, and a second electrode of the third transistor T3 is grounded. When a second control signal associated with the wake-up control signal is applied to the control electrode of the third transistor T3, the third transistor T3 switches from OFF to ON, and a voltage outputted by the first electrode of the third transistor T3 switches from a power supply voltage level of the second power supply PS2 to ground voltage level, thus forming a falling edge trigger signal, which can be used to wake up the circuit to be woken up. If no second control signal is applied to the control electrode of the third transistor T3, the third transistor T3 is OFF, and the level at the first electrode of the third transistor T3 remains at the power supply voltage level of the second power supply PS2.

In an embodiment, the third transistor T3 may be an NMOS, with the control electrode as the gate, the first electrode as the drain, and the second electrode as the source. In addition, the power supply voltage level of the second power supply PS2 connected to the third transistor T3 may be the same as or different from the power supply voltage level of the first power supply PS1 connected to the second transistor (for example, 5 V). In an embodiment, a voltage stabilizing circuit may also be provided between the gate and source of the third transistor T3.

That is to say, the falling edge generating circuit 230 can output a voltage signal having the power supply voltage level of the second power supply PS2 in the absence of a wake-up control signal from the output circuit 220. The falling edge generating circuit 230 can also output a ground voltage signal on the basis of a wake-up control signal from the output circuit 220, so as to output a falling edge trigger signal at the output end of the falling edge generating circuit 230 (the drain of the third transistor), to wake up the subsequent circuit to be woken up.

Thus, based on the circuit in Fig. 4, on each occasion that a rising edge is detected in the received input signal, a corresponding trigger signal can be outputted, for waking up the circuit to be woken up.

To better promote understanding of the solution of the present disclosure, the operating process of the circuit in Fig. 4 is described below with reference to different state switching events. The operating process described below takes as an example the case where the first transistor is an NPN bipolar transistor, the second transistor is a PMOS and the third transistor is an NMOS.

For example, in the case where the input signal switches from a state in which a first level (e.g. 0 V) is maintained to a state in which a second level (9 V or 6 V) is maintained, at the instant that the first level switches to the second level, the first capacitor C1 in the rising edge detection circuit 210 will conduct, so the second level (9 V or 6 V) can be applied to the base of the first transistor T1 to switch on the first transistor T1, and the first end of the rising edge detection circuit 210 (the end connected to the output circuit) is pulled down to ground level, so a ground level signal can be generated at this first end, to serve as a rising edge detection signal. Thus, the output circuit 210 can begin outputting a voltage signal (wake-up control signal) having the power supply voltage level (e.g. 12 V) of the first power supply PS1 in response to the rising edge detection signal, so a signal at the input end of the circuit in the next stage after the output circuit can have a rising edge (e.g. a rising edge from 0 to 12 V), so the third transistor T3 of the optional falling edge generating circuit 220 can also switch ON based on said power supply voltage level, so the voltage at the output end of the falling edge generating circuit 220 can realize a falling edge from the power supply voltage level (e.g. 5 V) of the second power supply PS2 to ground voltage level, so a falling edge trigger signal (for waking up the circuit to be woken up) can be supplied to the circuit to be woken up.

In addition, when the input signal subsequently remains at the second level (9 V or 6 V), due to the DC blocking action of the first capacitor C1, the second level will not be able to be applied to the base of the first transistor T1 again, so the first transistor T1 is switched off, and the first end of the rising edge detection circuit is essentially at the voltage of the first power supply PS1, so no rising edge detection signal can be supplied. Thus, the output end of the output circuit 220 does not output a signal, and ultimately, the voltage at the output end of the falling edge generating circuit 220 can remain at the power supply voltage level (e.g. 5 V) of the second power supply PS2.

A conducting path of the first transistor T1 may comprise the first power supply PS1, the voltage stabilizing circuitry in the voltage stabilizing circuit of the output circuit 220, the first transistor T1, and a ground end having ground level (e.g. 0 V). Optionally, for safety, a current limiting resistor, etc. may be provided on the conducting path of the first transistor T1, and a resistor-capacitor RC circuit may be provided between the first end of the rising edge detection circuit 210 and a control input end of the output circuit 220 (the gate of the second transistor T2), so that when the first transistor T1 is switched on, a capacitor Crc in the RC circuit may be considered to be a short circuit, so a current pathway from the first power supply PS1 to the ground end can be established quickly, thereby rapidly pulling down the voltage at the gate of the second transistor T2 of the output circuit 220; thus, current limitation and an increase in speed can be achieved, improving the circuit response. The charge on the capacitor Crc in the RC circuit can be discharged through a resistor Rrc in the RC circuit.

As another example, in the case where the input signal switches from a state in which a second level (9 V or 6 V) is maintained to a PWM signal state (the PWM signal comprises multiple PWM pulses switching between a first PWM level and a second PWM level, and due to the presence of diode D0 shown in Fig. 1, the first PWM level and the second PWM level may be the same as the first level and the second level respectively), when the voltage of the input signal remains at the second level (9 V or 6 V), the first transistor T1 is switched off, and therefore, the voltage at the first end of the rising edge detection circuit 210 is not ground voltage, so the rising edge detection signal is not generated at the first end of the rising edge detection circuit 210. When the voltage of the input signal switches from the second level (9 V or 6 V) or the second PWM level (9 V or 6 V) of the first PWM pulse to the first PWM level (0 V), the charge on the first capacitor C1 can discharge through the first resistor R1 and the first diode D1, the first transistor T1 remains OFF, and the voltage at the first end of the rising edge detection circuit 210 is not ground voltage, so as before, the rising edge detection signal is not generated at the first end of the rising edge detection circuit 210.

When the voltage of the input signal switches from the switched first PWM level (0 V) (i.e. the first PWM level that occurs first) to the second PWM level (9 V or 6 V) that is higher than the first PWM level, the first capacitor C1 conducts, the second PWM level is applied to the base of the first transistor T1, the first transistor T1 conducts, and the voltage at the first end of the rising edge detection circuit 210 can be ground voltage, so a rising edge detection signal can be generated at this first end. Thus, the output circuit 210 can begin outputting a voltage signal having the power supply voltage level (e.g. 12 V) of the first power supply PS1 in response to the rising edge detection signal, so a signal at the input end of the circuit in the next stage after the output circuit can have a rising edge (e.g. a rising edge from 0 to 12 V), so the third transistor T3 of the optional falling edge generating circuit 220 can switch ON based on the power supply voltage of the first power supply PS1, so the voltage at the output end of the falling edge generating circuit 220 can realize a falling edge from the power supply voltage level (e.g. 5 V) of the second power supply PS2 to ground voltage level, so a falling edge trigger signal (for waking up the circuit to be woken up) can be supplied to the circuit to be woken up.

In addition, although the PWM signal waveform comprises multiple rising edges, the PWM signal frequency is generally high, e.g. 1 kHz, so the duration of a PWM cycle of the PWM signal is shorter than the length of time needed for the first transistor to completely switch off, and/or the first capacitor C1 can remain conducting based on the level switching of the PWM signal; for this reason, the first transistor T1 remains switched on for the duration of the PWM signal, so the first end of the rising edge detection circuit 210 remains at ground voltage for the duration of the PWM signal, i.e. the first end of the rising edge detection circuit 210 continuously generates a rising edge detection signal for the duration of the PWM, so the output circuit 220 can keep outputting the voltage of the power supply PS1, and the voltage at the output end of the falling edge generating circuit 230 can remain at ground voltage.

As another example, in the case where the input signal switches from a state in which the first level (0 V) is maintained to a PWM signal state, when the voltage of the input signal remains at the first level (0 V), the first transistor T1 is switched off, and the voltage at the first end of the rising edge detection circuit 210 is associated with the power supply voltage of the power supply PS1, so the rising edge detection signal is not generated at the first end of the rising edge detection circuit 210.

At the instant that the voltage of the input signal switches from the first level or a first PWM level (0 V) preceding the first PWM pulse of a PWM signal to a second PWM level higher than the first PWM level, the first capacitor C1 conducts, the second PWM level is applied to the base of the first transistor T1, the first transistor T1 is switched on, and the first end of the rising edge detection circuit is at ground level, so the rising edge detection signal can be generated at the first end of the rising edge detection circuit 210. The output circuit 210 can begin outputting the power supply voltage (e.g. 12 V) of the power supply PS1 in response to the rising edge detection signal, so a signal at the input end of the circuit in the next stage after the output circuit can have a rising edge (e.g. a rising edge from 0 to 12 V), so the third transistor T3 of the optional falling edge generating circuit 220 can switch ON based on the power supply voltage of the first power supply PS1, so the voltage at the output end of the falling edge generating circuit 220 can realize a falling edge from the power supply voltage level (e.g. 5 V) of the second power supply PS2 to ground voltage level, so a falling edge trigger signal (for waking up the circuit to be woken up) can be supplied to the circuit to be woken up.

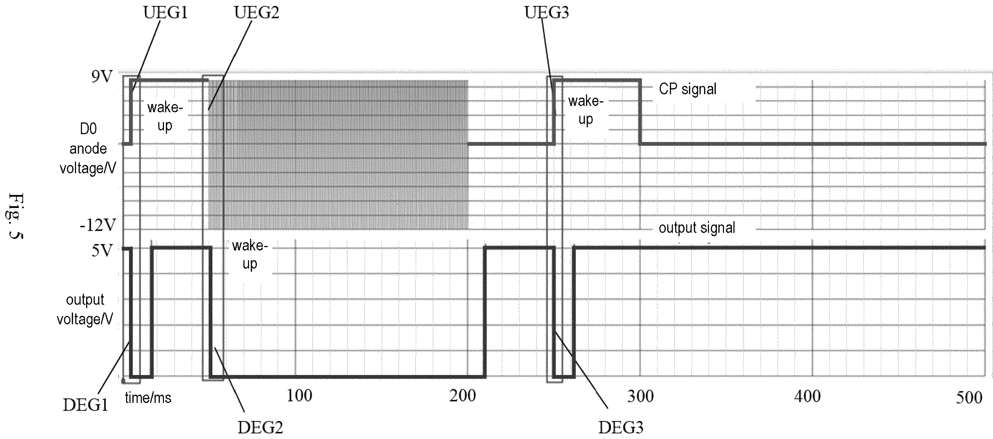

Fig. 5 shows a simulation result for the circuit shown in Fig. 4.

As shown in Fig. 5, a first waveform at the top of the figure corresponds to a signal at the anode side of diode D0 at the front end of the rising edge detection circuit 210 (i.e. a CP signal), and a second waveform at the bottom of the figure corresponds to a signal at the output end of the falling edge generating circuit 230.

As shown in Fig. 5, each rising edge (UEG1, UEG2, UEG3) of the CP signal in the first waveform will correspond to one falling edge (DEG1, DEG2, DEG3) in the second waveform. In addition, in the circuit of Fig. 4, due to the DC blocking action of the first capacitor C1, the first transistor T1 will switch off again after a period of time has elapsed since the first transistor T1 switched on, so the falling edge generating circuit 230 does not receive the power supply voltage 12 V of the power supply PS1 from the output circuit; therefore, the falling edge generating circuit 220 outputs the power supply voltage 5 V of the second power supply PS2. For this reason, after a period of time has elapsed since a falling edge occurred, the second waveform will change from LOW level 0 V to HIGH level 5 V again. In addition, for the duration of the PWM waveform, due to the fact that the first transistor in the rising edge detection circuit 210 can essentially remain ON, the second transistor T2 in the output circuit 220 is switched on, so the falling edge generating circuit 230 can receive the power supply voltage 12 V of the power supply PS1 from the output circuit. Therefore, the voltage at the output end of the falling edge generating circuit 220 remains at ground voltage, until a period of time has elapsed since the end of the duration of the PWM pulse waveform. At this time, similarly, due to the DC blocking action of the first capacitor C1, the first transistor T1 will switch off again, so the voltage at the output end of the falling edge generating circuit 220 will change from LOW level 0 V to HIGH level 5 V again.

Thus, as can be seen from Fig. 5, the circuit shown in Fig. 4 is able to effectively detect each type of rising edge of the CP signal (or the signal resulting from conversion thereof), so is suitable for detecting state switching events of the input signal associated with the CP signal, and so is able to effectively wake up the circuit to be woken up.

Thus, by means of the charging wake-up circuit according to embodiments of the present disclosure, various state switching events of input signals corresponding to various charging wake-up modes can be detected, so as to generate a wake-up signal for waking up the circuit to be woken up for each type of state switching event, so that the electric vehicle can be promptly woken up for charging in each charging wake-up mode.

According to another aspect of the present disclosure, an on-board charging device is further provided. The on-board charging device may be an on-board charger (OBC) included in an electric vehicle as shown in Fig. 1. The on-board charging device may comprise a control circuit (e.g. an MCU), and the control circuit may be woken up by a charging wake-up circuit (inside or outside the on-board charging device).

The charging wake-up circuit may be the charging wake-up circuit as described above with reference to Figs. 2 - 5; when the charging wake-up circuit supplies a wake-up signal to the control circuit, the control circuit can be woken up to control a charging process of the electric vehicle.

Alternatively, in other embodiments, the on-board charging device may further comprise an auxiliary power supply, and the control circuit in the on-board charging device can acquire an operating voltage from the auxiliary power supply; and when the electric vehicle is in a whole-vehicle sleep state, the auxiliary power supply does not operate, and thus does not supply the operating voltage to the control circuit. Consequently, control circuit power consumption can be reduced. The charging wake-up circuit may be the charging wake-up circuit as described above with reference to Figs. 2 - 5; when the charging wake-up circuit supplies a wake-up signal to the auxiliary power supply, the auxiliary power supply can restore the supply of operating voltage to the control circuit, so the control circuit can control the charging process of the electric vehicle.

According to another aspect of the present disclosure, an electric drive system is further provided.

The electric drive system according to embodiments of the present disclosure may comprise an on-board charging device and a power conversion circuit (e.g. a three-phase inversion circuit). The on-board charging device may be the on-board charging device as described above, used for charging an energy storage device (e.g. a supercapacitor or a battery outside the on-board charging device), and the power conversion circuit is used for generating drive power on the basis of power from the energy storage device, so as to drive an electric motor to rotate.

According to another aspect of the present disclosure, a vehicle is further provided.

The vehicle according to embodiments of the present disclosure may comprise an electric drive system, which may be the electric drive system as described above.

Although the present subject matter of various specific exemplary embodiments has been described in detail, each example is provided by way of explaining rather than restricting the present disclosure. After those skilled in the art have gained an understanding of the above-described content, they could easily make changes, variations, and equivalents to such embodiments. Therefore, the present invention does not rule out including such modifications, changes and/or additions to the present subject matter which would be obvious to those skilled in the art. For example, some of the illustrated or described features acting as one embodiment can be used with another embodiment to produce a further embodiment. Therefore, the intention is that the present disclosure covers such alterations, changes and equivalents.

Specifically, although the drawings of the present disclosure describe steps performed in a specific order for the purpose of illustration and discussion, respectively, the method of the present disclosure is not limited to the order or arrangement of the specific illustrations. Without departing from the scope of the present disclosure, various steps of the method described above can be omitted, rearranged, combined and/or adjusted in various ways.

Unless otherwise defined, all of the terms (including technical and scientific terms) used herein have the same meanings as those commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

The above is a description of the present disclosure and should not be regarded as limiting it. Although several exemplary embodiments of the present disclosure have been described, those skilled in the art will easily understand that many modifications can be made to the exemplary embodiments without departing from the novel teaching and advantages of the present disclosure. Therefore, all such modifications are intended to be included in the scope of the present disclosure as defined by the claims. It should be understood that the above is a description of the present disclosure, and should not be deemed to be limited to the specific embodiments disclosed; in addition, modifications made to the disclosed embodiments and other embodiments are intended to be included within the scope of the attached claims. The present disclosure is defined by the claims and their equivalents.

## Claims

1. A charging wake-up circuit (200), **characterized in that** the charging wake-up circuit (200) comprises:
a rising edge detection circuit (210), configured to receive an input signal from an external charging device, and generate a rising edge detection signal at a first end of the rising edge detection circuit (210) in response to a rising edge in a received input signal, wherein the received input signal is able to undergo state switching between multiple states; and
an output circuit (220), configured to generate a wake-up control signal in response to the rising edge detection signal, wherein the wake-up control signal is used to wake up a circuit to be woken up,
wherein the state switching comprises one or more of the following: switching from a state in which a first level is maintained to a state in which a second level greater than the first level is maintained; switching from the state in which the second level is maintained to a PWM signal state; or switching from the state in which the first level is maintained to the PWM signal state.

2. The charging wake-up circuit (200) according to Claim 1, **characterized in that** the charging wake-up circuit (200) further comprises:
a falling edge generating circuit (230), configured to generate a falling edge trigger signal, for waking up the circuit to be woken up, on the basis of the wake-up control signal generated by the output circuit (220).

3. The charging wake-up circuit (200) according to Claim 1 or 2, **characterized in that** the rising edge detection circuit (210) comprises:
a first resistor (R1), a first end of the first resistor (R1) receiving the input signal, and a second end of the first resistor (R1) being grounded;
a first capacitor (C1), a first end of the first capacitor (C1) being connected to the first end of the first resistor (R1);
a first diode (D1), a cathode end of the first diode (D1) being connected to a second end of the first capacitor (C1), and an anode end of the first diode (D1) being grounded;
a second resistor (R2) and a third resistor (R3), a first end of the second resistor (R2) being connected to the second end of the first capacitor (C1), a second end of the second resistor (R2) being connected to a first end of the third resistor (R3), and a second end of the third resistor (R3) being grounded; and
a first transistor (T1), a control electrode of the first transistor (T1) being connected to the second end of the second resistor (R2), a first electrode of the first transistor (T1) being grounded, and a second electrode of the first transistor (T1) serving as the first end of the rising edge detection circuit (210), and being connected to the output circuit (220).

4. The charging wake-up circuit (200) according to Claim 1 or 2, **characterized in that** the output circuit (220) further comprises:
a second transistor (T2), a first electrode of the second transistor (T2) being connected to a power supply, a control electrode of the second transistor (T2) being connected to the first end of the rising edge detection circuit (210), and a second electrode of the second transistor (T2) serving as an output end of the output circuit (220);
wherein, when a first control signal associated with the rising edge detection signal is applied to the control electrode of the second transistor (T2), the second transistor (T2) switches from OFF to ON, and the second electrode of the second transistor (T2) outputs the wake-up control signal.

5. The charging wake-up circuit (200) according to Claim 2, **characterized in that** the falling edge generating circuit (230) further comprises:
a third transistor (T3), a first electrode of the third transistor (T3) being connected to a power supply and the circuit to be woken up, a control electrode of the third transistor (T3) being connected to an output end of the output circuit (220), and a second electrode of the third transistor (T3) being grounded;
wherein, when a second control signal associated with the wake-up control signal is applied to the control electrode of the third transistor (T3), the third transistor (T3) switches from OFF to ON, and the first electrode of the third transistor (T3) outputs the falling edge trigger signal, for waking up the circuit to be woken up.

6. The charging wake-up circuit (200) according to Claim 1, **characterized in that** the charging wake-up circuit further comprises:
a resistor-capacitor RC circuit, connected between the first end of the rising edge detection circuit (210) and a control input end of the output circuit (220).

7. The charging wake-up circuit (200) according to Claim 3, **characterized in that**, in the case where the input signal switches from the state in which the first level is maintained to the state in which the second level is maintained,
at the instant that a voltage of the input signal switches from the first level to the second level, the first transistor (T1) is switched on, and a ground level signal is generated at the first end of the rising edge detection circuit (210), to serve as the rising edge detection signal; and
when the voltage of the input signal subsequently remains at the second level, the first transistor (T1) is switched off, and the rising edge detection signal is not generated at the first end of the rising edge detection circuit (210).

8. The charging wake-up circuit (200) according to Claim 3, **characterized in that** a PWM signal corresponding to the PWM signal state has a first PWM level and a second PWM level higher than the first PWM level, and wherein, in the case where the input signal switches from the state in which the second level is maintained to the PWM signal state,
when a voltage of the input signal remains at the second level, the first transistor (T1) is switched off, and the rising edge detection signal is not generated at the first end of the rising edge detection circuit (210);
at the instant that the voltage of the input signal switches from the first PWM level to the second PWM level, the first transistor (T1) is switched on, and a ground level signal is generated at the first end of the rising edge detection circuit (210), to serve as the rising edge detection signal.

9. The charging wake-up circuit (200) according to Claim 3, **characterized in that** a PWM signal corresponding to the PWM signal state has a first PWM level and a second PWM level higher than the first PWM level, and wherein, in the case where the input signal switches from the state in which the first level is maintained to the PWM signal state,
when a voltage of the input signal remains at the first level, the first transistor (T1) is switched off, and the rising edge detection signal is not generated at the first end of the rising edge detection circuit (210);
at the instant that the voltage of the input signal switches from the first level or the first PWM level preceding a first PWM pulse of the PWM signal to the second PWM level, the first transistor (T1) is switched on, and a ground level signal is generated at the first end of the rising edge detection circuit (210), to serve as the rising edge detection signal.

10. The charging wake-up circuit (200) according to Claim 8 or 9, **characterized in that** the first transistor (T1) remains switched on for a duration of the PWM signal state, such that the rising edge detection signal continues to be generated for the duration of the PWM signal state.

11. The charging wake-up circuit (200) according to Claim 1, **characterized in that** the input signal is a signal resulting from conversion of a control pilot (CP) signal outputted from the external charging device, and the circuit to be woken up is a control circuit in an on-board charging device, and the charging wake-up circuit is also arranged in the on-board charging device.

12. An on-board charging device, **characterized in that** the on-board charging device comprises a control circuit,
wherein the charging wake-up circuit according to any one of Claims 1 - 11 is used to wake up the control circuit.

13. An electric drive system, **characterized in that** the electric drive system comprises:
the on-board charging device according to Claim 12, for charging an energy storage device; and
a power conversion circuit, for generating drive power on the basis of power from the energy storage device.

14. A vehicle, **characterized in that** the vehicle comprises:
the electric drive system according to Claim 13 or the on-board charging device according to Claim 12.
